# EUROPÄISCHE PATENTSCHRIFT

(11) **EP 1 516 292 B1**
(45) Veröffentlichungstag und Bekanntmachung des Hinweises auf die Patenterteilung: **07.12.2005**
(21) Anmeldenummer: 03756944.9
(22) Anmeldetag: 20.05.2003
(51) Int. Cl.: G07C 5/00, G01M 1/00, B60R 16/02, B60R 25/04

(54) **VERFAHREN UND VORRICHTUNG FÜR EINEN FAHRZEUGBEZOGENEN TELEMATIKDIENST**
METHOD AND DEVICE FOR A VEHICLE-RELATED TELEMATICS SERVICE
PROCEDE ET DISPOSITIF DE MISE EN OEUVRE D'UN SERVICE TELEMATIQUE CONCERNANT UN VEHICULE

(30) Priorität: 10.06.2002 DE 10225788; 20.11.2002 DE 10254284
(43) Veröffentlichungstag der Anmeldung: 23.03.2005
(73) Patentinhaber: ROBERT BOSCH GMBH, 70442 Stuttgart (DE)
(72) Erfinder: WEISS, Cornelia, 71299 Leonberg (DE); FISCHER, Joerg, 31139 Hildesheim (DE)
(86) Internationale Anmeldenummer: PCT/DE2003/001627
(87) Internationale Veröffentlichungsnummer: WO 2003/105094

(56) Entgegenhaltungen:
- WO-A-03/063448
- DE-A- 10 026 754

## Beschreibung

### Stand der Technik

Die Erfindung betrifft ein Verfahren und eine Vorrichtung für einen fahrzeugbezogenen Telematikdienst mit Einwirken auf wenigstens eine Funktionalität in einem Fahrzeug über eine Luftschnittstelle, z.B. über ein Mobilfunknetz oder die Kommunikation über eine Bluetooth-Verbindung. Ein Realisierungsbeispiel eines solchen Dienstes ist die Ferndiagnose im Kraftfahrzeug.

Die zunehmende Vernetzung von Steuergeräten in heutigen Kraftfahrzeugen bietet immer bessere Einwirkungsmöglichkeiten auf Funktionalitäten im Fahrzeug, z.B. bessere Diagnosemöglichkeiten im Fehlerfall oder Möglichkeiten zur Fernbedienung von Funktionen und/oder Komponenten des Fahrzeugs. In diesem Zusammenhang bestehen Konzepte, mit Hilfe eines mobilfunkgestützten Einwirkens zuverlässig und sicher auf die Funktionalität im Fahrzeug über beliebige Entfernungen hinweg zuzugreifen, beispielsweise über eine Ferndiagnose zuverlässige und qualitativ hochwertige Fehleranalysen durch ein Service-Center bzw. einen Ferndiagnose-Server, der eine entsprechende Diagnosedatenbank umfasst, durchzuführen. Gemäß diesen Ansätzen werden im Fahrzeug integrierte Kommunikationssysteme wie beispielsweise Mobiltelefone und/oder GSM-gestützte Telematikendgeräte genutzt, um eine Datenübertragung zwischen den an ein Fahrzeugnetzwerk angeschlossenen Steuergeräten und/oder Komponenten und dem Server des Service-Centers durchzuführen. Einen Vorschlag für ein derartiges System beschreibt die gattungsbildende DE 100 26 754 A1. Eine konkrete Realisierung eines solchen Systems bzw. der betroffenen Server- und Endgeräte, werden nicht angegeben.

### Vorteile der Erfindung

Der Einsatz eines bei der Diagnose von Kraftfahrzeugsteuereinheiten ohnehin eingesetzten Protokolls zur Realisierung einer Ferndiagnose hat den Vorteil, dass die zu diagnostizierende Steuereinheiten an keine anderen Kommunikationsstandards, beispielsweise Kommunikationsstandards des Internets, angepasst werden müssen. Dies deshalb, weil das Service-Center mit dem Fahrzeug unter Verwendung der im Fahrzeug ohnehin eingesetzten Protokolle kommuniziert. Damit ist es möglich, auch heutige Fahrzeuge mit einer Fernzugriffsmöglichkeit zu versehen, ohne dass wesentliche Änderungen in den Steuereinheiten erforderlich sind. Allgemein wird also für den jeweiligen Telematikdienst ein Protokoll (allgemein Anwendungsprotokoll) eingesetzt, welches auch im Fahrzeug zur Durchführung des entsprechenden Dienstes vor Ort verwendet wird.

Besonders vorteilhaft in diesem Zusammenhang ist eine Gateway-Einrichtung, welche im Fahrzeug angeordnet ist und welche für den Empfang und das Senden von Daten über die Luftschnittstelle und für die Gewährleistung der zusätzlich erforderlichen Sicherheitsfunktionen zuständig ist.

Besonders vorteilhaft ist, dass als Protokoll für den Ferndiagnoseeingriff das in der Automobilindustrie weitgehend als Standard akzeptierte Protokoll KWP2000 eingesetzt wird, welches nicht nur fahrzeugintern zur Anwendung kommt, sondern in der verteilten Ausprägung der Ferndiagnose auch zur Kommunikation zwischen dem fahrzeugseitigen Teil und dem Server verwendet wird.

In besonders vorteilhafter Weise werden durch eine geeignete Umsetzung die fahrzeugintern einzuhaltenden Zeitbedingungen berücksichtigt und die durch die Luftübertragung entstehende Totzeit kompensiert. Eine besonders vorteilhafte Ausführung ist, dass über die Luftschnittstelle vollständige Nachrichten übermittelt werden, die dann fahrzeugintern bzw. serverintern zur Einhaltung der Zeitbedingungen des verwendeten Transportprotokolls fragmentiert werden.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert.
Figur 1 zeigt dabei ein Übersichtsbild einer Systemarchitektur für den Fernzugriff.
In Figur 2 ist ein Schichtenmodell einer Gateway-Einrichtung im fahrzeugseitigen Teil des Fernzugriffsystems sowie einer entsprechenden Gateway-Einrichtung im zentralen Teil dargestellt.
Figur 3 zeigt ein Ablaufdiagramm für den Nachrichtenaustausch zwischen einem zu diagnostizierendem Steuergerät und einem Service-Center, während in
Figur 4 ein Ablaufdiagramm für diesen Nachrichtenfluss auf der Ebene der Transportprotokolle dargestellt ist.

### Beschreibung von Ausführungsbeispielen

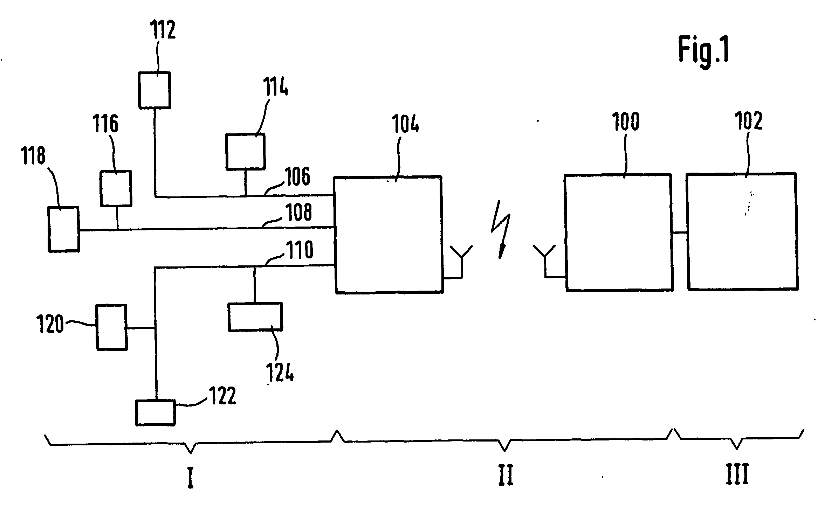

Figur 1 zeigt ein Übersichtsbild eines Systems für einen fahrzeugbezogenen Telematikdienst, wobei Informationen zwischen einem Fahrzeug (dort wenigstens einem Endgerät) und einem Server über ein Mobilfunknetz bzw. über ein Datennetz wie beispielsweise das Internet ausgetauscht werden. Die in Figur 1 als Übersichtsdarstellung gezeigte Systemarchitektur für einen Fernzugriff wird in Verbindung mit Funktionen zur Fernwirkung, Ferndiagnose, Fernwartung, Software-Download, etc. eingesetzt. Unter Fernwirkung bzw. Fernabfrage wird dabei im wesentlichen die Fernsteuerung von Fahrzeugfunktionen, insbesondere Komfortfunktionen wie das Einschalten der Standheizung, etc. sowie das Abfragen von Fahrzeugstati und/oder Betriebsparametern verstanden. Dabei initiiert der Nutzer eine Kommunikation mit dem Fahrzeug über einen zentralen Server oder er kommuniziert direkt mit dem Fahrzeug. Ferndiagnose umfasst das Fernauslesen von Diagnosedaten aus dem Fahrzeug, deren Analyse und gegebenenfalls das Erzeugen einer Empfehlung für das weitergehende Handeln. Analyse der Daten und Generierung der Empfehlung erfolgt dabei durch einen zentralen Server, der mit dem Fahrzeug über ein Mobilfunknetz, über ein drahtgebundenes Netz und/oder über ein Datennetz wie beispielsweise das Internet mit dem Kraftfahrzeug in Verbindung steht. Ferner ist in diesem Zusammenhang als Funktion der sogenannte Software-Download bzw. das Remote-Flashing zu nennen, mit deren Hilfe ein neuer Programmcode oder Parameter auf der Software konfigurierbare Systeme im Fahrzeug, beispielsweise Steuergeräte, aufgebracht werden, um die Funktionalität oder die Leistungsfähigkeit zu erhöhen. Auch hier erfolgt die Kommunikation über ein Mobilfunknetz, ein drahtgebundenes Netz und/oder beispielsweise das Internet ausgehend von einem zentralen Rechner (Server) bzw. Service-Center. Fernwartung stellt im wesentlichen die Überwachung des Fahrzeugzustandes und den Zugriff auf die Wartungsdaten im Fahrzeug von einer zentralen Stelle aus dar, um zu überprüfen, ob, wann und welche Maßnahmen zur Wahrung des Sollzustandes durchgeführt werden. Ein Beispiel hierfür ist das dynamische Anpassen von Wartungsintervallen. Allgemein werden diese Funktionalitäten hier unter dem Begriff des fahrzeugbezogenen Telematikdienstes subsummiert.

Figur 1 zeigt einen Überblick über die Systemarchitektur für einen Fernzugriff. Dargestellt sind als I die durch den Fernzugriff zu beeinflussenden Steuergeräte im Fahrzeug, als II Gateway-Einrichtungen zur Protokolltransformation und für Sicherheitsfunktionen und als III das Service-Center-seitige Endgerät, beispielsweise ein Werkstatttester, eine Operator-Konsole, etc. Die fahrzeugseitige Gateway-Einrichtung 104 ist dabei über eine Luftschnittstelle mit einer Gateway-Einrichtung 100 eines Service-Centers verbunden. Dabei handelt es sich je nach Ausführungsbeispiel um eine Bluetooth-, eine GSM-, eine GPRS-Schnittstelle oder eine andere Luftschnittstelle. Die Gateway-Einrichtung 100 ist ferner mit dem Service-Center-seitigen Endgerät 102 zum Datenaustausch verbunden. Bei diesem Endgerät handelt es sich entweder um einen Werkstatttester, eine Operator-Konsole, oder Ähnliches. In einer alternativen Ausführung ist die Gateway-Einrichtung des Service-Centers nicht direkt an die Luftschnittstelle angebunden, sondern ist über ein Datennetz, beispielsweise das Internet, mit einem Service-Provider verbunden, dessen Server wiederum an die Luftschnittstelle angeschlossen ist. Bei der fahrzeugseitigen Gateway-Einrichtung 104 handelt es sich je nach Ausführungsbeispiel um ein zentrales Gateway für das Fahrzeug oder um ein Punktzu-Punkt-Gateway, das z.B. eine Bluetooth-Schnittstelle oder ein GSM-Modul mit einem CAN-Subnetz des Fahrzeugs verbindet. Im dargestellten Ausführungsbeispiel, welches in der Realität auch bevorzugt wird, handelt es sich bei der Gateway-Einrichtung 104 um ein zentrales Gateway, welches für den Empfang und das Senden von Daten über die Luftschnittstelle und ggf. die Gewährleistung der zusätzlich erforderlichen Sicherheitsfunktionen eingerichtet ist. Auf der anderen Seite ist die Gateway-Einrichtung 104 über ein oder verschiedene Bussysteme 106, 108 und 110 mit den zu diagnostizierenden Steuereinheiten im Fahrzeug 112 bis 124 verbunden. Bei den Bussen handelt es sich beispielsweise um einen Komfort- und Karosseriebus, z.B. einen Lowspeed-CAN oder LIN-Bus, welcher Steuereinheiten für die Klimaanlage und des Kombiinstruments miteinander verbindet, ferner um einen Infotainment-Bus, beispielsweise einen Highspeed-CAN-, MOST-, Firewire-Bus, etc., welcher Autoradio und Navigationssysteme verbindet oder um einen Highspeed-CAN-Bus oder Flexray-Bus, welcher die Steuereinheiten für die Motorsteuerung, die Bremsensteuerung, Rückhaltesysteme, etc. miteinander verknüpft. Ferner ist an die Gateway-Einrichtung (in Figur 1 nicht dargestellt) über eine serielle oder parallele Schnittstelle (z.B. UART) ein GSM-Modul angebunden, mit dessen Hilfe das Fahrzeug Daten mit dem Service-Center austauscht. Die Gateway-Einrichtung 104 umfasst dabei ggf. auch einen Firewall, durch welchen die Fahrzeugsubnetze nach außen abgeschirmt sind.

Die Gateway-Einrichtung 100 auf der Seite des Service-Centers umfasst im wesentlichen die gleichen Funktionen und Elemente wie die Gateway-Einrichtung 104 im Fahrzeug. Die Gateway-Einrichtung stellt die Kommunikation mit dem Endgerät 102 sicher sowie bedient die Luftschnittelle. Auch hier wird im bevorzugten Ausführungsbeispiel ein GSM-Modul von der Gateway-Einrichtung über einen UART-Treiber bedient. Ist vorgesehen, dass der Übertragungskanal verschlüsselt wird, so finden in beiden Gateway-Einrichtungen die notwendigen Ver- und Entschlüsselungen statt. Zusätzlich enthalten die beiden Gateway-Einrichtungen die erforderlichen Protokolltransformationen, das heißt die Umsetzung der empfangenen oder gesendeten Daten vom Porotkoll der Luftschnittstelle, z.B. dem GSM-Protokoll, zum oder aus dem Protokoll des Fahrzeugsystems, z.B. dem CAN-Protokoll.

Zur Kommunikation der beiden Gateway-Einrichtungen miteinander über die Luftschnittstelle wird eine Verbindung aufgebaut. Im bevorzugten Ausführungsbeispiel ist dies eine GSM-Verbindung, in anderen Ausführungen werden andere Transportprotokolle eingesetzt. Wesentlich ist nun, dass bei der in Figur 1 dargestellten Systemarchitektur zur Nachrichtenübertragung ein Protokoll eingesetzt wird, welches im Falle der Diagnose auch bei der Diagnose der Steuereinheiten im Fahrzeug verwendet wird. Solche Protokolle arbeiten in der Regel unter bestimmten Zeitbedingungen. Ein derartiges Protokoll ist beispielsweise das sogenannte KWP2000-Diagnoseprotokoll, welches gegebenenfalls in Abwandlungen in einer Vielzahl von Anwendungen in Verbindung mit Kraftfahrzeugen verwendet wird. Der hier beschriebene Gegenstand ist jedoch nicht nur auf die Verwendung des konkreten KWP2000-Protokolls bei der Diagnose eingeschränkt, sondern wird auch in Verbindung mit anderen Protokollen und/oder Diensten eingesetzt. Dabei sind in der Regel innerhalb des Kraftfahrzeugs enge Zeitbedingungen zu beachten. Grundsätzlich wird nach einer aufgebauten und autorisierten Verbindung zwischen den beiden Gateway-Einheiten ein Nachrichtenaustausch durchgeführt auf der Basis des verwendeten Protokolls. Dabei leitet die Gateway-Einrichtung im Fahrzeug ankommende Nachrichten, beispielsweise KWP2000-Request-Nachrichten, an das zu diagnostizierende Steuergerät weiter und sendet dessen Antworten, beispielsweise die KWP2000-Response-Nachrichten, zum Gateway im Service-Center weiter. Das Gateway im Service-Center arbeitet in analoger Weise. In einem bevorzugten Ausführungsbeispiel kann an die Gateway-Einrichtung 104 im Fahrzeug auch direkt ein Testgerät angeschlossen werden, welches auf der Basis desselben Protokolls mit dem zu diagnostizierenden Steuergerät verkehrt wie es bei der verteilten Anwendung im Rahmen der Fernwirkung verwendet wird.

Problematisch ist, dass das im Fahrzeug verwendete Diagnoseprotokoll, beispielweise das KWP2000, bezüglich der Kommunikation mit dem angeschlossenen Testgerät in der Regel sehr enge Zeitbedingungen vorschreibt. Werden diese Zeitbedingungen nicht erfüllt, so wird der Diagnosevorgang abgebrochen. Die Zeitbedingungen sind dabei so eng, dass diese infolge der über die Luftschnittstelle bestehende Übertragungsverzögerung nicht erfüllt werden können. Daher ist wie nachfolgend beschrieben bei der dargestellten verteilten Anwendung die synchrone Verbindung zwischen Steuereinheit und Testgerät entkoppelt und es wird eine asynchrone Verbindung über die Luftschnittstelle bereitgestellt. Dabei wird innerhalb des Kraftfahrzeugsystems die synchrone Verbindung, hier zwischen Gateway-Einrichtung und der zu diagnostizierender Steuereinheit aufrecht erhalten, ebenso gegebenenfalls auf der Service-Center-Seite, wo eine synchrone Verbindung zwischen Service-Center-Gateway und Testgerät bestehen kann. Die Luftschnittstellenverbindung ist dagegen asynchron und gehorcht den Zeitbedingungen des verwendeten Diagnoseprotokolls nicht, sondern lediglich denen des dort angewendeten Protokolls. Die Gateway-Einrichtung im Fahrzeug und/oder die im Service-Center ist also derart ausgestaltet, dass sie einerseits die Verbindung zum Service-Center steuert, andererseits die zeitkritische Verbindung zu der zu diagnostizierenden Steuereinheit.

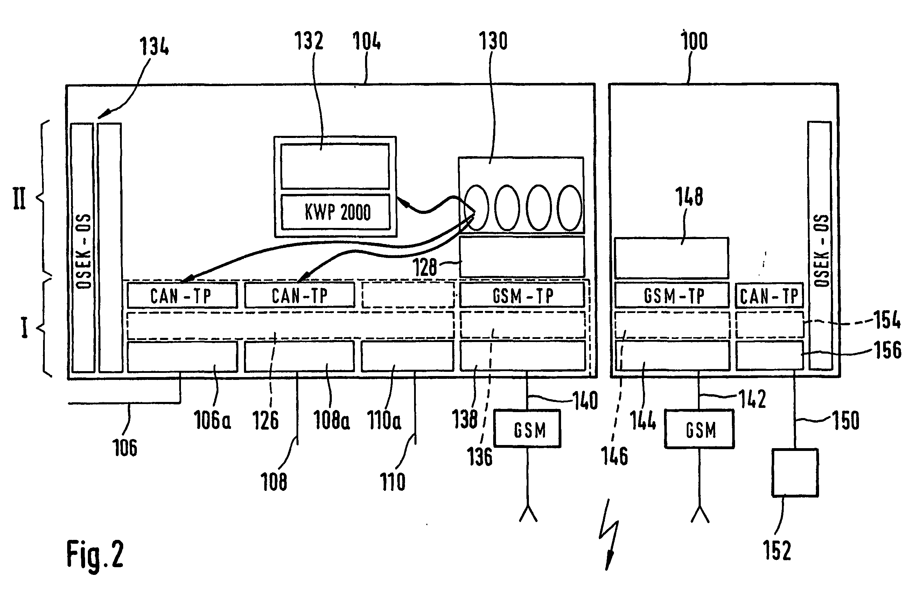

In Figur 2 wird ein Schichtenmodell der Gateway-Einrichtung 104 im Fahrzeug dargestellt. Die Gateway-Einrichtung 100 im Service-Center ist entsprechend aufgebaut. Die Gateway-Einrichtung 104 im Fahrzeug integriert alle erforderlichen Schichten eines Kommunikationssystems zur Ankopplung von mindestens einem Fahrzeugsubnetz und zur Kommunikation mit einem Service-Center über eine Luftschnittstelle. Im dargestellten Ausführungsbeispiel der Figur 2 verbindet die Gateway-Einrichtung 104 insgesamt drei Fahrzeugsubnetze 106,108 und 110, die bereits anhand von Figur 1 dargestellt wurde, und integriert einen GSM-Protokoll-Stack für den Datenaustausch mit einem Service-Center. Das Schichtenmodell beschreibt das Kommunikationssystem I sowie das Anwendungssystem II des Gateways. In der untersten Schicht des Kommunikationssystems I sind im bevorzugten Ausführungsbeispiel für jedes Fahrzeug Subsystem-Treiber, vorzugsweise CAN-Treiber 106a, 108a und 110a, vorgesehen. Den Treibern übergeordnet ist als zweite Schicht eine CAN-Vermittlungsschicht 126, welche zur Umsetzung der von den einzelnen Subsystemen empfangenen und auf einzelne Subsysteme oder auf die Luftschnittstelle zu verteilende Nachrichten dient. Die Vermittlungsschicht ist zuständig für das fahrzeuginterne Routing von Nachrichten, im Ausführungsbeispiel CAN-Nachrichten. Über der Vermittlungsschicht befinden sich die Transportprotokollschicht, vorzugsweise CAN-Transportprotokollschicht, die dem jeweiligen Subsystem zugeordnet sind. Dieses Transportprotokoll ist zum Versenden von Nachrichten über das jeweilige Subsystem notwendig, welche länger als die maximale Datenlänge des Subsystems sind, bei CAN-Anwendungen länger als 8 Datenbytes. Im Anwendungssystem II befinden sich z.B. die Sicherheitsdienste 128, welche z.B. für die Verschlüsselung, Authentifizierung und Autorisierung des Fernzugriffs zuständig sind. Ferner befinden sich hier die Remote-Dienste 130, die das Fahrzeug nach außen anbietet. Dies sind beispielsweise Ferndiagnosedienste, Fernsteuerungsdienste, Fernwartungsdienste, Software-Download-Dienste, etc. Alle Anfragen über die Luftschnittstelle werden immer an einen dieser Remote-Dienste weitergeleitet. Dieser entscheidet, ob eine Nachricht fahrzeugintern weitergeleitet wird. Durch diese Kopplung im Anwendungssystem kann man höchsten Sicherheitsansprochen gerecht werden. Ist das Gateway selbst diagnostizierbar, so wird neben der Diagnoseapplikation 132 auch der Diagnosehilfsdienst KWP2000 verwendet. Neben den genannten Elementen umfasst das Fahrzeug-Gateway auch ein Netzwerkmanagement sowie lokale und globale Managements der Betriebszustände und die Systemdiagnose, die im folgenden nicht weiter betrachtet wird. Darüber hinaus ist ein Echtzeitbetriebssystem (z.B. ein OSEKkonfromes OS) sowie ein Überwachungs-Modul (134) vorgesehen. Zur Bedienung der Luftschnittstelle ist im Gateway 104 ferner ein GSM-Transportprotokoll vorgesehen, eine GSM-Vermittlungsschicht 136 sowie ein UART-Treiber 138, welcher über eine SPI-Schnittstelle 140 mit einem GSM-Modul verbunden ist.

Die Gateway-Einrichtung 100 im Service-Center ist entsprechend aufgebaut. Sie koppelt von GSM auf ein Subsystem, vorzugsweise CAN, und umgekehrt. Daher ist auch hier ein GSM-Modul über eine Schnittstelle 142 mit einem UART-Treiber 144 verbunden. Darüber ist eine GSM-Vermittlungsschicht 146 sowie ein GSM-Transportprotokoll angeordnet. Die Sicherheitsdienste 148 entsprechen denen im Fahrzeug-Gateway 104. Über ein CAN-Subsystem 150 ist ein Servicetester 152 bzw. eine Konsole angebunden. Auch hier wird die CAN-Anbindung über ein CAN-Transportprotokoll, eine CAN-Vermittlungsschicht 154 sowie ein CAN-Treiber 156 bereitgestellt. Die Kopplung von GSM auf ein CAN-Bussystem im Service-Center erlaubt die direkte Anbindung des Diagnose-Tester 152 oder die Weiterleitung der Daten zu einem PC, welcher diese entsprechend auswertet. Sollen Ferndiagnosedaten über das Internet verfügbar gemacht werden, so wird im Gateway 100 eine Kopplung auf IP-basierte Protokolle erfolgen. In einer anderen Ausführung werden die Diagnoseergebnisse im Service-Center in einer Datenbank protokolliert und dann einem Service im Internet zur Verfügung gestellt. Die Abbildung auf eine IP-basierte Kommunikation erfolgt auf jeden Fall an zentraler Stelle im Service-Center und nicht in jedem Fahrzeug.

Der Remote-Dienst Ferndiagnose ist in Figur 2 in 130 als linkes Oval dargestellt. Diese Anwendung umfasst Programme, die derart ausgestaltet sind, dass sie bei einer eingehenden Diagnoseanforderung entscheiden, ob diese Anforderung für die Eigendiagnose des Gateways bestimmt ist oder ob diese für ein Steuergerät bestimmt ist, das sich an einem der angeschlossenen Busse befindet. Zu diesem Zweck ist eine Tabelle vorgesehen, in der die Steuergerätekonfigurationen des Fahrzeugs (wie z.B. Identifikationsnummer, auszulesende Fehlerspeicher, etc.) aufgelistet sind und anhand derer die ankommende Nachricht auf den entsprechenden Bus vermittelt wird. Bei Änderung der Steuergeräte-Konfigurationen ist daher diese Tabelle nachzuführen.

Wie oben erwähnt wird zur Diagnose der einzelnen Steuereinheiten im Fahrzeug ein Diagnose-Protokoll eingesetzt, welches in engen Zeitrahmen arbeitet. Ferner haben in der Regel die fahrzeugintern eingesetzten Bussysteme eine begrenzte Nachrichtenlänge. Die im Diagnose-Protokoll vorgesehenen Nachrichten haben in der Regel eine davon abweichende maximale Länge. So ist beispielsweise derzeit bei KWP2000-Nachrichten eine maximale Länge von 255 Bytes vorgesehen, während das fahrzeugintern eingesetzte CAN-Protokoll eine Begrenzung auf 8 Bytes aufweist. Ferner ist in jedem Steuergerät, welches über KWP2000 und CAN diagnostiziert wird, ein Transport-Protokoll integriert, welches mehrer Timing-Bedingungen im Bereich von wenigen msec umfasst. Die Übertragungsverzögerung über GSM beträgt mindestens 600 msec. Eine transparente Übertragung von CAN-Nachrichten vom zu diagnostizierenden Steuergerät zum Service-Center ist aus diesem Grund nicht möglich. Die Verwendung eines speziellen TransportProtokolls innerhalb der Gateway-Einrichtung ist daher unumgänglich. Dieses muss je nach Ausführung eine zeitliche Entkopplung und/oder eine Anpassung der Datenlängen durchführen. Für die Einhaltung der Timing-Bedingungen in der Transportschicht des zu diagnostizierenden Steuergeräts sind die Partnerinstanzen der Transportschicht im Sicherheits-Gateway des Fahrzeugs zuständig und entsprechend sorgt die Transportschicht im Gateway des Service-Centers für die Einhaltung der Timing-Bedingungen in den Partnerinstanzen der Transportschicht des Testers. Ferner passt die Transportschicht im Gateway die Datenlängen an, indem sie die Daten fragmentiert bzw. defragmentiert. Für die Übertragung von vollständigen Nachrichten, z.B. KWP2000-Nachrichten, über GSM kann ein beliebiges Transport-Protokoll verwendet werden.

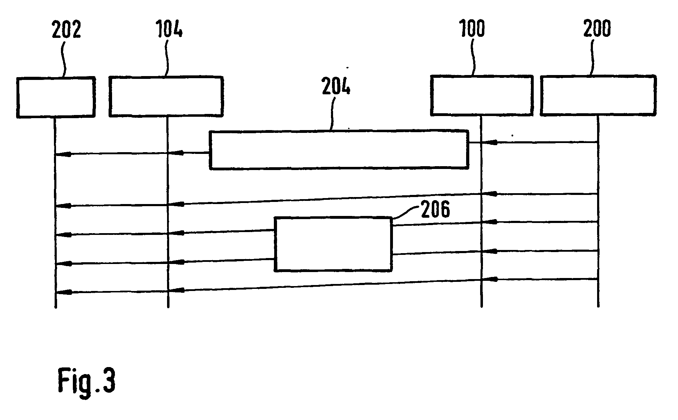

In Figur 3 ist ein Ablaufdiagramm dargestellt, welches den Nachrichtenaustausch zwischen den beteiligten Komponenten in der Nutzungsphase der Ferndiagnose für das verwendete Diagnose-Protokoll KWP2000 darstellt. Gezeigt ist der Nachrichtenaustausch zwischen dem Service-Center (z.B. Tester 200), dem Gateway 100 des Service-Centers, dem Gateway 104 des Fahrzeugs und dem zu diagnostizierenden Steuergerät 202. Als erste Nachricht wird ausgehend vom Tester 200 über das Gateway 100 eine KWP2000-Nachricht über die Luftschnittstelle gesandt, welche das zu diagnostizierende Steuergerät nach Weiterleitung durch das Gateway 104 in den Diagnosemodus bringt. Die KWP2000-Nachrichten werden vom Service-Center transparent verschlüsselt über die GSM-Verbindung zwischen den Gateways übertragen. Die Umsetzung der Nachricht auf die anderen Protokolle findet in den Transportschichten der Gateways statt. Danach folgen ausgehend vom Tester zyklische sogenannte Tester-Präsent-Nachrichten, die notwendig sind, um das zu diagnostizierende Steuergerät im Diagnosemodus zu halten. Sobald das zu diagnostizierende Steuergerät sich im Diagnosemodus befindet, beginnt die eigentliche Diagnose, in der Nachrichten mit Nutzdaten vom Service-Center zum Steuergerät und umgekehrt (KWP2000-Diagnose-Request- sowie -Response-Nachrichten) übermittelt werden.

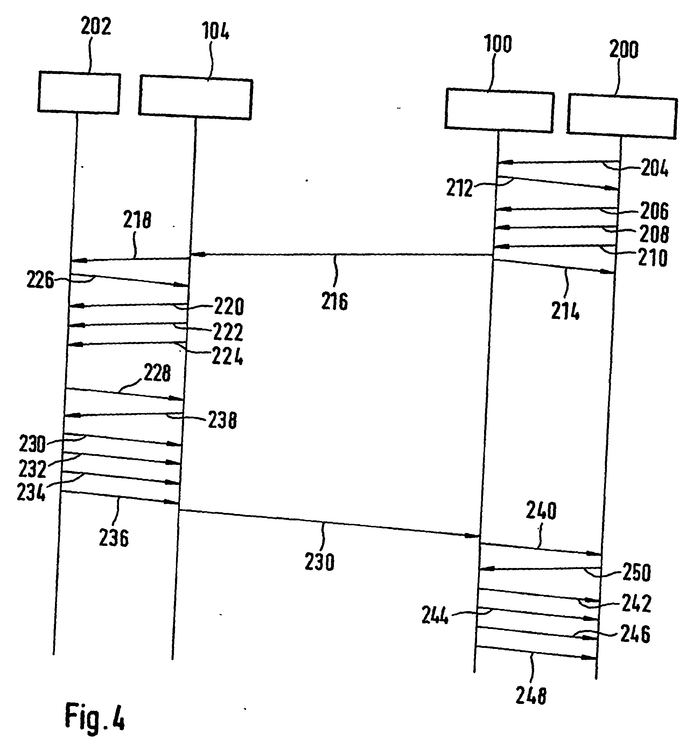

Letzteres ist im Ablaufdiagramm der Figur 4 dargestellt, welches am Beispiel einen exemplarischen Diagnose-Requests und der zugehörigen Antwort den Datenaustausch zwischen Tester 200 und Steuergerät 202 über die Luftschnittstelle und die entsprechenden Gateways auf der Ebene der Transport-Protokolle darstellt. In dieser Darstellung ist die Entkopplung über die Transport-Protokolle deutlich zu erkennen. Es werden keine einzelne CAN-Frames über die GSM-Strecke verschickt, sondern vollständige KWP2000-Nachrichten. Diese werden gegebenenfalls vor Senden über die Luftschnittstelle verschlüsselt und beim Empfang entschlüsselt. Somit findet im Gateway 100 vor dem Senden eine Defragmentierung der CAN-Frames und im Fahrzeug-Gateway 104 eine Fragmentierung der vollständigen Diagnose-Protokoll-Nachricht in CAN-Frames bzw. umgekehrt im Falle der Antwort statt. Die vom Operator oder vom Ablaufprogramm des Testers 200 erzeugte Nachricht des Diagnose-Protokolls wird über die CAN-Verbindung zum Gateway 100 in den CAN-Frames 204, 206, 208 und 210 übermittelt. Die Transportschicht in der Gateway-Einrichtung 100 bedient die im Rahmen der Zeitbedingungen des Datenaustausches zwischen Tester und Gateway erforderlichen Rückmeldungen 212 und 214. Ferner defragmentiert die Transportschicht der Gateway-Einrichtung 100 die ankommenden Nachrichten und übersendet über die GSM-Schnittstelle eine lange, zusammengesetzte Diagnose-Nachricht 216 über das ISO-TransportprotokolL Die Gateway-Einrichtung 104 empfängt diese Nachricht und das dortige Transport-Protokoll fragmentiert diese Nachrichten wieder und sendet sie über den CAN-Bus als einzelne CAN-Frames zum diagnostizierenden Steuergerät 202 (Nachrichten 218, 220, 222, 224). Ferner sichert die Transportschicht der Gateway-Einrichtung 104 sowie die entsprechende Transportschicht im zu diagnostizierenden Steuergerät durch Übermitteln von Quittungssignalen 226, 228 die Zeitbedingungen dieser Kommunikation. Entsprechend wird beim Senden von Daten vom zu diagnostizierenden Steuergerät zum Service-Center vorgegangen. Auch hier wird die lange Diagnose-Nachricht 230, die dann über die GSM-Verbindung gesendet wird, in einzelnen Fragmenten 228, 230, 232, 234, 236 vom zu diagnostizierenden Steuergerät ans Gateway 104 geschickt. Die dortige Transportschicht setzt diese Fragmente zur Diagnose-Nachricht um und übermittelt Quittierungssignale 238 zum Einhalten der Zeitbedingungen. Die vollständige Diagnose-Nachricht wird dann zum Service-Center übertragen (Gateway 100). Die Transportschicht des Gateway 100 fragmentiert die erhaltene Nachricht und sendet diese in Fragmenten entsprechend den Transport-Protokollen des Testers an diesen weiter (Frames 240, 242, 244, 246, 248). Die Transportschicht des Testers sichert durch Quittungssignale 250 die Einhaltung der Zeitbedingungen.

Die oben dargestellt Vorgehensweise wird bei allen fahrzeugbezogenen Telematikdiensten mit Fernwirkung eingesetzt, bei denen die genannten Voraussetzung erfüllt sind.

## Patentansprüche

1. Verfahren für einen fahrzeugbezogenen Telematikdienst, mit einem im Fahrzeug angeordneten Endgerät, welches über eine Luftschnittstelle mit einem Service-Center (102) kommuniziert, welches über wenigstens eine weitere Schnittstelle (106, 108, 110) mit Steuereinheiten (112, 114) im Fahrzeug kommuniziert, **dadurch gekennzeichnet, dass** für den Telematikdienst sowohl für die Übertragung über die Luftschnittstelle als auch für die Kommunikation im Fahrzeug dasselbe Anwendungs-Protokoll verwendet wird.

2. Verfahren nach Anspruch 1, **dadurch gekennzeichnet, dass** zwischen der wenigstens einen Steuereinheit (112, 114) des Fahrzeugs und dem Endgerät ein Transport-Protokoll vorgesehen ist, welches zur Sicherstellung der Übertragung Zeitbedingungen vorschreibt, die wesentlich kürzer sind als über die Luftschnittstelle realisierbar.

3. Verfahren nach Anspruch 2, **dadurch gekennzeichnet, dass** das Endgerät Mittel aufweist, die die Zeitbedingungen in der fahrzeuginternen Kommunikation durch Senden von zeitkorrekten Signalen (218, 228) einhält.

4. Verfahren nach einem der vorhergehenden Ansprüche, **dadurch gekennzeichnet, dass** das Endgerät Mittel aufweist, welche eine über die Luftschnittstelle empfangene oder eine über die Luftschnittstelle zu sendende Nachricht auf das Fahrzeug-Transport-Protokoll umsetzen.

5. Verfahren nach Anspruch 3, **dadurch gekennzeichnet, dass** über die Luftschnittstelle eine komplette Nachricht empfangen bzw. gesendet wird und diese Nachricht für die fahrzeuginterne Kommunikation im Endgerät fragmentiert bzw. defragmentiert wird.

6. Verfahren nach einem der vorhergehenden Ansprüche, **dadurch gekennzeichnet, dass** der fahrzeugbezogene Telematikdienst eine Ferndiagnose ist und als Anwendungs-Protokoll das Diagnose-Protokoll KWP2000 eingesetzt wird.

7. Verfahren nach einem der vorhergehenden Ansprüche, **dadurch gekennzeichnet, dass** das Endgerät Programme für den fahrzeugbezogenen Telematikdienst aufweist, welche eine Tabelle für die Konfigurationen der Steuereinheiten des Fahrzeugs umfaßt und die die empfangenen Nachrichten auf das Fahrzeugsubsystem, an dem die Steuereinheit angebunden ist, umsetzen.

8. Vorrichtung für einen fahrzeugbezogenen Telematikdienst, mit einem im Fahrzeug angeordneten Endgerät, welches über eine Luftschnittstelle mit einem Service-Center (102) und über eine weitere Schnittstelle (106) mit wenigstens einer im Fahrzeug angeordneten Steuereinheit (112) kommuniziert, **dadurch gekennzeichnet, dass** das Endgerät Nachrichten über die Luftschnittstelle empfängt bzw. sendet und über die weitere Schnittstelle (106) sendet bzw. empfängt im Rahmen der Durchführung des Telematikdienstes, wobei sowohl für die Übertragung über die Luftschnittstelle als auch für die Kommunikation im Fahrzeug dasselbe Anwendungs-Protokoll verwendet wird..

9. Vorrichtung für einen fahrzeugbezogenen Telematikdienst, mit einem Gateway (100) als Teil eines Service-Centers, welches über eine Luftschnittstelle mit einem Kraftfahrzeug in Verbindung steht und welches eine weitere Schnittstelle zum Anschließen eines Testers (200) oder eines vergleichbaren Gerätes aufweist, **dadurch gekennzeichnet, dass** das Gateway (100) eine Transportsschicht (212, 214) enthält, welches die über die Luftschnittstelle ankommenden oder gesendeten Daten auf das Transport-Protokoll zur Kommunikation mit dem Tester (200) umsetzt.

## Claims

1. Method for a vehicle-related telematics service, having a terminal which is arranged in the vehicle and which communicates with a service centre (102) via an air interface and which communicates with control units (112, 114) in the vehicle via at least one further interface (106, 108, 110), **characterized in that** the same application protocol is used for the telematics service both for the transmission via the air interface and for the communication in the vehicle.

2. Method according to Claim 1, **characterized in that** a transport protocol which, in order to safeguard the transmission, prescribes time conditions which are significantly shorter than can be implemented via the air interface is provided between the at least one control unit (112, 114) of the vehicle and the terminal.

3. Method according to Claim 2, **characterized in that** the terminal has means which complies with the time conditions in the communication internal to the vehicle by transmitting correctly timed signals (218, 228).

4. Method according to one of the preceding claims, **characterized in that** the terminal has means which convert a message which has been received via the air interface or is to be transmitted via the air interface to the vehicle transport protocol.

5. Method according to Claim 3, **characterized in that** the complete message is received or transmitted via the air interface, and this message is fragmented or defragmented for the communication internal to the vehicle in the terminal.

6. Method according to one of the preceding claims, **characterized in that** the vehicle-related telematics service is a remote diagnosis and the diagnostic protocol KWP2000 is used as an application protocol.

7. Method according to one of the preceding claims, **characterized in that** the terminal has programmes for the vehicle-related telematics service which comprise a table for the configurations of the control units of the vehicle and which convert the received messages to the vehicle subsystem to which the control unit is connected.

8. Device for a vehicle-related telematics service, having a terminal which is arranged in the vehicle and which communicates with a service centre (102) via an air interface and with at least one control unit (112) arranged in the vehicle via a further interface (106), **characterized in that** the terminal receives and transmits messages via the air interface and transmits and receives messages via the further interface (106) within the scope of carrying out the telematics service, wherein the same application protocol is used both for the transmission via the air interface and for the communication in the vehicle.

9. Device for a vehicle-related telematics service, having a gateway (100) as part of a service centre which is connected to a motor vehicle via an air interface, and which has a further interface for connecting a tester (200) or a comparable device, **characterized in that** the gateway (100) contains a transport layer (212, 214) which converts the data which is received or transmitted via the air interface to the transport protocol for communication with the tester (200).

## Revendications

1. Procédé pour un service télématique lié au véhicule comportant un terminal - placé dans le véhicule - qui communique avec un centre de services (102) par l'intermédiaire d'une interface radio et avec des unités de commande (112, 114) dans le véhicule par l'intermédiaire d'au moins une autre interface (106, 108, 110),
**caractérisé en ce que**
le même protocole d'application est utilisé pour le service télématique afin d'assurer aussi bien la transmission par l'interface radio que la communication dans le véhicule.

2. Procédé selon la revendication 1,
**caractérisé en ce que**
on prévoit entre l'au moins une unité de commande (112, 114) du véhicule et le terminal, un protocole de transport qui, pour assurer la transmission, prescrit des conditions de temps significativement plus courtes que celles possibles par l'intermédiaire de l'interface radio.

3. Procédé selon la revendication 2,
**caractérisé en ce que**
le terminal comporte des moyens qui maintiennent les conditions de temps dans la communication interne au véhicule en envoyant des signaux (218, 228) chronologiquement corrects.

4. Procédé selon l'une des revendications précédentes,
**caractérisé en ce que**
le terminal comporte des moyens qui transforment en protocole de transport du véhicule une information reçue par l'intermédiaire de l'interface radio ou à envoyer par l'intermédiaire de l'interface radio.

5. Procédé selon la revendication 3,
**caractérisé en ce que**
une information complète est envoyée ou reçue par l'intermédiaire de l'interface radio et cette information est fragmentée ou défragmentée dans le terminal afin de permettre la communication interne au véhicule.

6. Procédé selon l'une des revendications précédentes,
**caractérisé en ce que**
le service télématique lié au véhicule est un télédiagnostic et le protocole d'application utilisé est le protocole de diagnostic KWP 2000.

7. Procédé selon l'une des revendications précédentes,
**caractérisé en ce que**
le terminal comporte des programmes, destinés au service télématique lié au véhicule, qui comprennent un tableau pour configurer les unités de commande du véhicule et qui transforment les informations reçues dans le sous-système de véhicule auquel est liée l'unité de commande.

8. Dispositif destiné à un service télématique lié au véhicule et comportant un terminal - placé dans le véhicule - qui communique avec un centre de services (102) par l'intermédiaire d'une interface radio et avec au moins une unité de commande (112) placée dans le véhicule par l'intermédiaire d'une autre interface (106)
**caractérisé en ce que**
le terminal reçoit ou envoie des informations par l'intermédiaire de l'interface radio et reçoit ou envoie des informations par l'intermédiaire d'une autre interface (106) lorsqu'il s'agit de réaliser le service télématique, le même protocole d'application étant utilisé pour le service télématique afin d'assurer la transmission par l'interface radio aussi bien que la communication dans le véhicule.

9. Dispositif destiné à un service télématique lié au véhicule et comportant une passerelle (100) qui fait partie d'un centre de services et qui est en liaison avec un véhicule automobile par l'intermédiaire d'une interface radio et présente une autre interface pour raccorder un contrôleur (200) ou un appareil comparable,
**caractérisé en ce que**
la passerelle (100) contient une couche de transport (212, 214) qui transforme en protocole de transport pour communiquer avec le contrôleur (200) les données reçues ou envoyées par l'intermédiaire de l'interface radio.
